# FASCICULE DE BREVET EUROPEEN

(11) **EP 0 938 397 B1**
(45) Date de publication et mention de la délivrance du brevet: **27.11.2002**
(21) Numéro de dépôt: 97912246.2
(22) Date de dépôt: 24.10.1997
(51) Int. Cl.: B23Q 11/08, B23Q 5/38, F16P 3/02

(54) **DISPOSITIF DE PROTECTION D'ORGANES DE GUIDAGE ET D'ENTRAINEMENT D'UNE MACHINE-OUTIL**
EINRICHTUNG ZUM SCHÜTZEN VON FÜHRUNGSGLIEDERN UND ANTRIEBSVORRICHTUNGEN EINER WERKZEUGMASCHINE
PROTECTING DEVICE FOR GUIDE AND DRIVE MEMBERS OF A MACHINE TOOL

(30) Priorité: 24.10.1996 FR 9613211
(43) Date de publication de la demande: 01.09.1999
(73) Titulaire: Renault Automation Comau, 92365 Meudon La Forêt Cedex (FR)
(72) Inventeur: CAHUZAC, Daniel, F-81120 Réalmont (FR)
(74) Mandataire: Richebourg, Michel François
(86) Numéro de dépôt international: FR9701905
(87) Numéro de publication internationale: WO98017437

(56) Documents cités:
- EP-A- 0 407 599
- GB-A- 757 555
- US-A- 4 722 452

## Description

La présente invention a trait au domaine des machines-outils et plus particulièrement aux adaptations permettant d'assurer la protection des organes assurant la translation d'un organe mobile d'une machine-outil. Un dispositif selon le préambule de la revendication 1 est connu du document GB-A-757 555.

Classiquement, l'usinage ou plus généralement le travail des métaux génère des projections de copeaux et de jets d'huile résultant de la rotation d'un outil au contact d'une pièce à usiner. Du fait de leur nature métallique ou abrasive, ces projections peuvent devenir la cause de la diminution de la durée de vie des organes de guidage et d'entraînement de la machine-outil. Malgré les dispositifs de protection interne que possède chaque organe de guidage ou d'entraînement, le dépôt répété, l'accumulation et la projection à grande vitesse des débouchures dues à l'usinage, fatiguent les dispositifs les plus solides et les endommagent en détériorant leurs propriétés ce qui ne garantie plus l'étanchéité des organes de guidage et d'entraînement. L'endommagement des organes de guidage peut engendrer un jeu dans la liaison, lequel jeu est préjudiciable à la précision de l'usinage réalisé par la machine-outil. L'endommagement des organes d'entraînement peut aussi provoquer leur arrêt par grippage ou diminuer leurs capacités et donc celles de la machine-outil. En outre, ces organes de guidage et d'entraînement sont coûteux et pas faciles à changer du fait de la difficulté à les atteindre car intégrés dans l'infrastructure de la machine, ils sont donc difficiles d'accès sans total démontage de la machine. Il est donc primordial de garantir l'efficacité et la durée de vie de ces organes, le plus longtemps possible.

Au problème de la projection des copeaux s'ajoute aujourd'hui les contraintes de l'usinage à très grande vitesse, c'est à dire des vitesses d'usinage d'outils plus rapides et des déplacements avec une très grande accélération. Ces contraintes ont amené les concepteurs à réaliser de nouveaux organes de guidage et d'entraînement assurant la précision des mouvements de la machine-outil tout en résistant aux contraintes d'accélération induites par un usinage à très grande vitesse. Ces organes sont d'autant plus chers.

Plusieurs solutions, notamment les soufflets, contribuent à la protection hermétique des organes de translation. Le soufflet est un élément de capotage d'étanchéité élastique de forme tubulaire placé autour des organes de guidage et dont une extrémité est liée à la partie fixe et l'autre à la partie mobile. Le tube du soufflet est constitué d'une succession de plis disposés en éventail, qui se referment lorsque la partie mobile est proche de la partie fixe et s'ouvrent lorsque la partie mobile s'éloigne de la partie fixe. Cette solution a pour avantage de proposer une enceinte hermétique autour des organes de guidage. Outre le fait qu'il n'existe pas toujours un modèle adapté à la taille et à la longueur des déplacements des organes de guidage, une protection classique par soufflet a pour désavantage d'accumuler les débouchures et les copeaux projetés par la machine-outil à grande vitesse et sur un grand périmètre dans les plis dudit soufflet lorsque le guidage est horizontal. Il en résulte des dépôts qui peuvent être préjudiciables à l'élasticité du soufflet et empêcher le pliage et le dépliage des plis du soufflet dans de bonnes conditions.

Une autre contrainte des organes de protection réalisés pour les machines-outils d'usinage à très grande vitesse réside dans l'utilisation, comme organes d'entraînement, de moteurs linéaires du type de ceux comportant un alignement de bobinages sous tension alternative, créant, dans un conducteur placé entre les pôles, un champ électromagnétique variable, donc des courants induits dans ce conducteur dit bloc secondaire, de sorte que la force de réaction électromagnétique créée tend à déplacer le bloc de bobinages. Ce type de composants a pour inconvénient d'aimanter son environnement immédiat et donc d'exercer une attraction sur tous les copeaux ou poussières générées par l'usinage d'une pièce présentant des composants ferreux ou magnétisés. Ces copeaux ou poussières métalliques étant les principales causes de dommage des composants, il est primordial d'isoler les organes de guidage et d'entraînement de leur environnement.

Ce que constatant, la demanderesse a mené des recherches ayant pour objet une protection hermétique des différents organes de guidage et d'entraînement pouvant s'adapter aux contraintes de l'usinage à très grande vitesse. Ces recherches se sont dirigées vers les concepts généraux de capotage repris par le brevet européen n° 0 407 599 et surtout dans le brevet anglais n° 757 555 qui décrivent un dispositif de protection d'organes de guidage et d'entraînement d'une machine-outil d'usinage comportant un ensemble mobile en translation remarquable en ce qu'il comprend trois éléments de capotage se déplaçant l'un dans l'autre pour former une structure télescopique homocinétique dont l'élément de capotage de plus petite dimension dit premier élément de capotage est fixé au bâti de la machine-outil, l'élément de capotage de plus grande dimension dit troisième élément de capotage est fixé à l'ensemble mobile en translation, et l'élément de capotage intermédiaire dit deuxième élément de capotage coulisse sur la surface extérieure dudit premier élément de capotage et sur la surface intérieure dudit troisième élément de capotage de façon à former autour des organes de guidage et d'entraînement une enceinte hermétique et extensible quelle que soit la course de l'ensemble mobile.

Cette première caractéristique a pour avantage d'apporter une solution de protection avec un minimum de pièces donc à un moindre coût. La forme progressive de la structure de protection allant de l'élément de capotage de plus petite dimension solidaire du bâti vers l'élément de capotage de plus grande dimension solidaire de l'ensemble mobile a pour avantage d'écarter les copeaux tombés vers l'extérieur et non de les accumuler vers l'ensemble mobile si cette configuration était inversée.

De plus, toujours selon ces concepts généraux, ledit deuxième élément de capotage est lié avec les premier et troisième éléments de capotage de façon à ce que le mouvement en translation de l'ensemble mobile auquel est fixé ledit troisième élément de capotage, provoque instantanément le mouvement dudit deuxième élément de capotage assurant un déplacement contrôlé et sans à-coups de la structure télescopique qui passe d'une position rétractée de repos où les différents éléments de capotage sont l'un dans l'autre à une position déployée où les différents éléments de capotage sont l'un à la suite de l'autre. Une application particulièrement adaptée à ce dispositif se trouve dans le domaine des machines-outils d'usinage à très grande vitesse, où les mouvements des organes mobiles sont de plus en plus rapides et où il est donc très important, pour la durée de vie des composants et pour la précision des usinages d'assurer une protection hermétique elle-même d'une grande durée de vie du fait du coût des éléments de guidage et d'entraînement. En effet, en raison du mouvement simultané des éléments de capotage mobiles provoqué par le déplacement de l'ensemble mobile, les mouvements de chaque élément de capotage se font sans aucun choc car le deuxième élément de capotage amorce son mouvement avant même que son extrémité arrière par rapport au sens de déploiement du troisième élément de capotage n'atteigne l'extrémité arrière du deuxième élément de capotage. De même, dans le sens inverse où la structure télescopique retourne à sa position de repos, le deuxième élément de capotage ne se met en mouvement que lorsque le troisième élément de capotage est en mouvement mais non lorsque l'extrémité avant du troisième élément de capotage atteint l'extrémité avant du deuxième élément de capotage. Ainsi, la transmission contrôlée du mouvement de l'organe mobile aux différents éléments de capotage mobiles de ladite protection télescopique permet d'éviter les chocs induits par une structure télescopique et donc de permettre à ce dispositif de protection d'avoir une grande durée de vie. *L'entraînement homocinétique des différents éléments de capotage est assuré dans ces dispositifs de protection au moyen d'au moins un dispositif de type pantographe.*

Les recherches menées à partir de ces concepts généraux, ont permis à la demanderesse d'aboutir à la conception d'un dispositif de protection d'organes de guidage et d'entraînement d'une machine-outil d'usinage original comportant un ensemble mobile en translation permettant, *en proposant une alternative à l'entraînement par pantographe,* d'obvier aux inconvénients précités et de garantir une protection optimale des organes non seulement pour une machine-outil d'usinage classique mais aussi pour une machine-outil d'usinage à très grande vitesse. Ainsi l'invention concerne un dispositif selon la revendication 1.

*Selon la caractéristique principale de l'invention, la transmission du mouvement relatif entre ledit troisième élément de capotage et ledit deuxième élément de capotage est réalisé par une double liaison pignon*/*crémaillère, les pignons et les crémaillères constituant cette liaison étant situés sous le dispositif de protection, ledit deuxième élément de capotage étant équipé de deux platines qui, disposées sur la paroi intérieure dudit deuxième élément de capotage, comportent un arbre perpendiculaire à l'axe de translation sur lequel pivote un pignon en liaison avec deux paires de crémaillères dont l'une, dite paire de crémaillères fixes, est solidaire du bâti de la machine-outil et dont l'autre, dite paire de crémaillères mobiles, est solidaire dudit troisième élément de capotage.*

L'utilisation d'une liaison par engrenage offre de nombreux avantages, et notamment :
- d'assurer la transmission régulière du mouvement,
- de supporter des vitesses élevées,
- de permettre le calcul des vitesses relatives et des courses,
- de permettre l'utilisation d'éléments standards et donc à faible coût,

De plus, une double liaison pignon/crémaillère garantit la même transmission de mouvement de par et d'autre de l'axe de mouvement en translation. D'autre part, cette liaison pignon/crémaillère permet des accélérations et des vitesses différentes entre les différents éléments constituant le capotage.

Selon un mode de réalisation préférée de l'invention, la transmission pignon/crémaillère est conçue de façon à ce que la vitesse et l'accélération du troisième élément de capotage solidaire de l'organe mobile soient deux fois plus importantes que la vitesse et l'accélération du deuxième élément de capotage. Ainsi, pour passer de la position rétractée de repos à la position déployée, le premier élément de capotage reste fixe, le deuxième élément de capotage suit une course jusqu'à ce que son extrémité arrière atteigne l'extrémité avant dudit premier élément de capotage, et le troisième élément de capotage suit une course double de la course dudit deuxième élément de capotage afin que son extrémité arrière atteigne l'extrémité avant dudit deuxième élément de capotage.

L'étanchéité de l'enceinte est avantageusement parachevée par des joints racleurs fixés sur les parois intérieures des deux éléments de capotage mobiles. Ces joints éviteront l'introduction de copeaux et de poussières métalliques dans l'enceinte formée par la structure télescopique pour obtenir une protection optimale.

Les concepts fondamentaux de l'invention venant d'être exposés ci-dessus dans leur forme la plus élémentaire, d'autres détails et caractéristiques ressortiront plus clairement à la lecture de la description qui suit donnant, à titre d'exemple non limitatif et en regard des dessins annexés, deux modes de réalisation d'un dispositif de protection télescopique d'organes de guidage et d'entraînement d'une machine-outil d'usinage comportant un ensemble mobile en translation conforme à l'invention. Cette description se réfère aux dessins annexés sur lesquels :
La figure 1a est une vue de face d'un bâti sur lequel évolue en translation un ensemble mobile qui comporte fixé à un de ses cotés un dispositif de protection télescopique et représenté en position intermédiaire.
La figure 1b est une vue de face du bâti de la figure 1a avec l'ensemble mobile en position fin de course droite.
La figure 1c est une vue de face du bâti de la figure 1a avec l'ensemble mobile en position fin de course gauche.
La figure 2a est une vue de dessus du dispositif de protection télescopique selon l'invention en position rétractée.
La figure 2b est une vue de dessus du dispositif de protection télescopique de la figure 2a en position déployée .
La figure 3 est une vue en coupe de la structure télescopique en position repos dont le plan de coupe est situé au niveau du centre du premier élément de capotage.
La figure 4a est une vue de face d'un bâti sur lequel évolue en translation un ensemble mobile qui comporte fixés à ses cotés deux dispositifs de protection télescopique conformes à l'invention et représentés en position intermédiaire.
La figure 4b est une vue de face du bâti de la figure 4a avec l'ensemble mobile en position fin de course droite.
La figure 4c est une vue de face du bâti de la figure 4a avec l'ensemble mobile en position fin de course gauche.

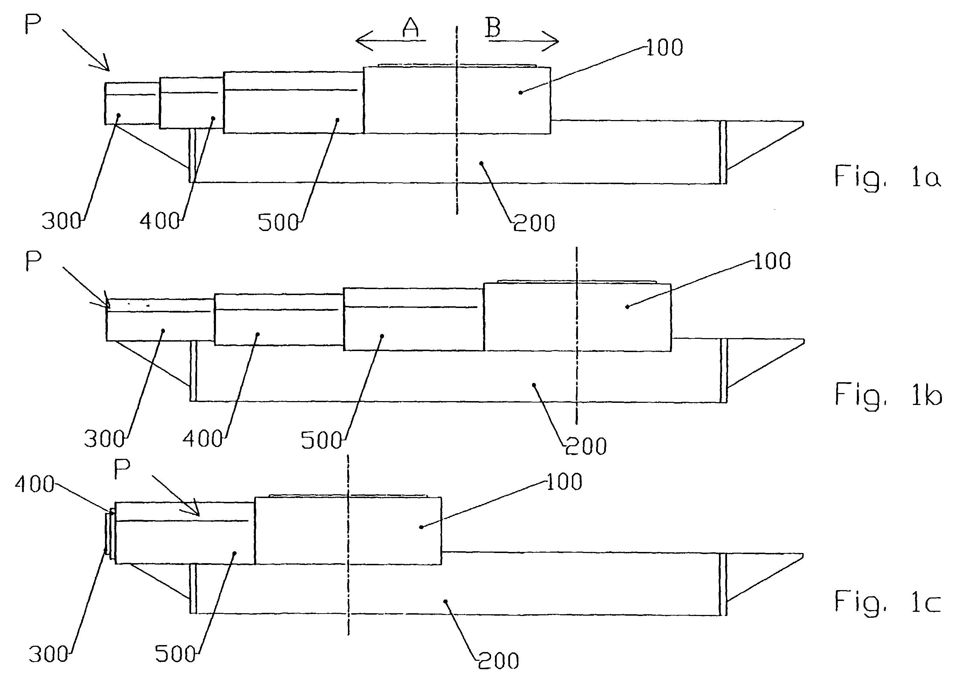

Tel qu'illustré sur le dessin de la figure 1a, un ensemble mobile 100 évolue suivant une direction horizontale ( flèches A et B) sur un bâti 200 de machine-outil. A un de ses cotés, le susdit ensemble mobile 100 comporte un dispositif de protection télescopique P.

Ce dispositif de protection télescopique P comprend trois éléments de capotage 300, 400, 500 formant une structure télescopique dont l'élément de capotage de plus petite dimension 300, dit premier élément de capotage, est fixé au bâti 200 de la machine-outil, l'élément de capotage de plus grande dimension 500 dit troisième élément de capotage est fixé à l'ensemble mobile en translation 100, et un élément de capotage intermédiaire 400, dit deuxième élément de capotage, coulisse sur la surface extérieure dudit premier élément de capotage 300 et sur la surface intérieure dudit troisième élément de capotage 500 de façon à former autour des organes de guidage et d'entraînement, une enceinte hermétique et extensible suivant la course de l'ensemble mobile 100.

Ce dispositif de protection P couvre les organes de guidage et d'entraînement de l'ensemble mobile quelle que soit sa position. Ainsi, le mouvement de l'ensemble mobile 100 fait passer le dispositif de protection P d'une position déployée comme illustrée sur le dessin de la figure 1b où tous les éléments de capotage 300, 400 et 500 sont l'un à la suite de l'autre, à une position rétractée où les éléments de capotage 300, 400, 500 sont l'un à l'intérieur de l'autre.

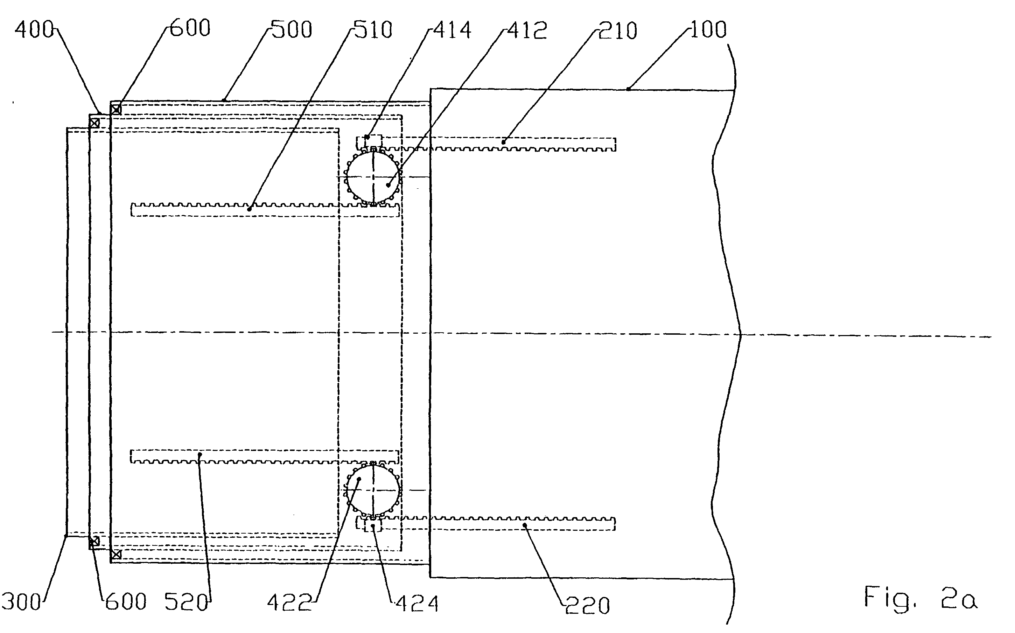

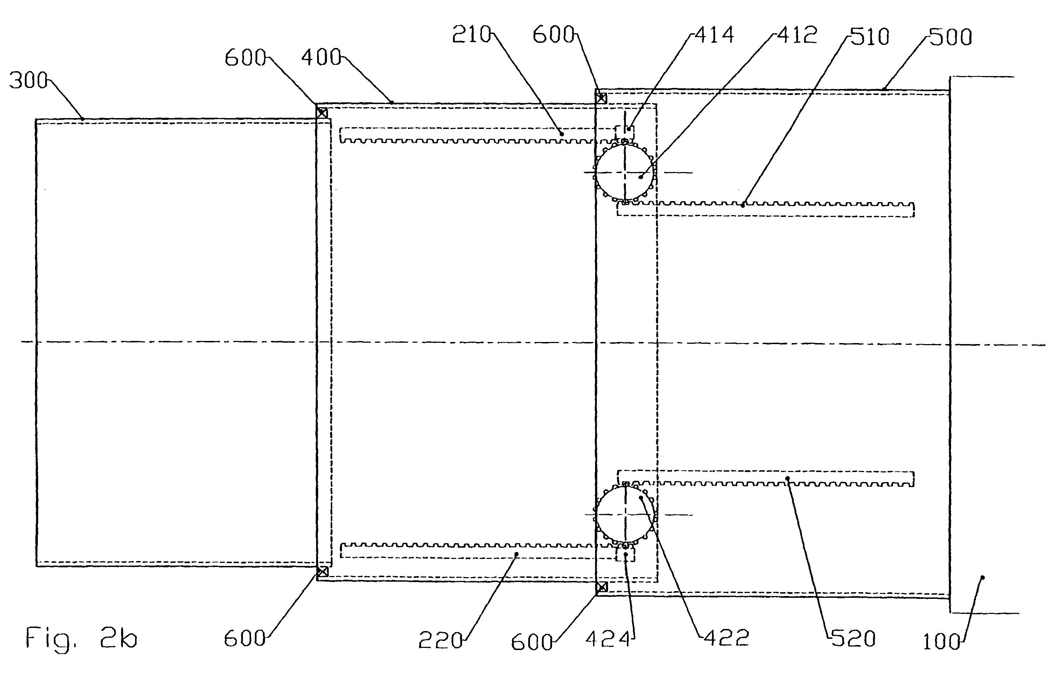

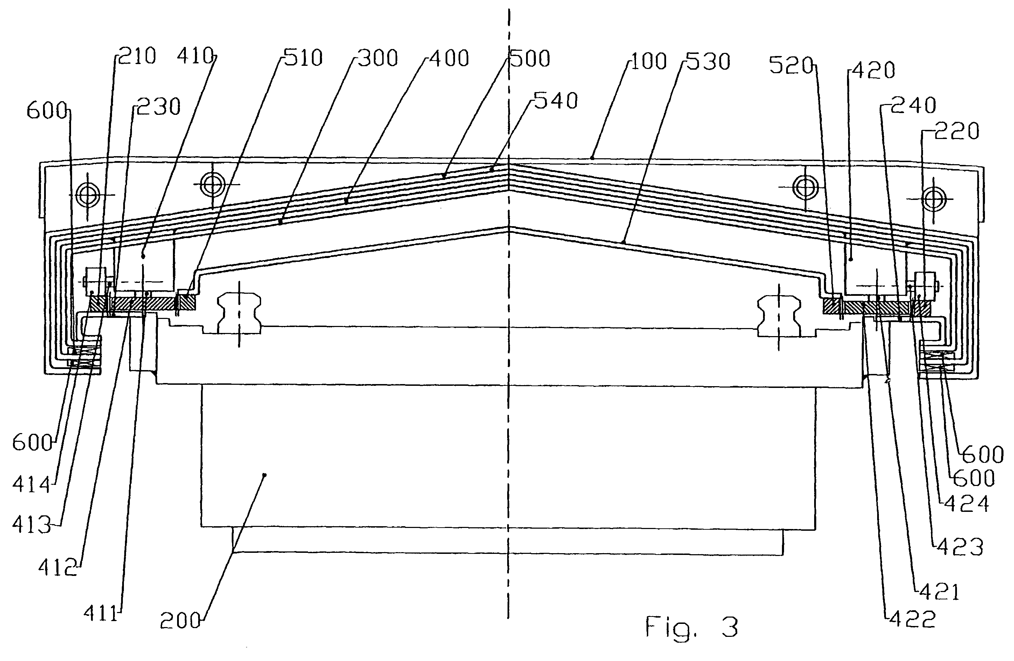

Tel que représenté sur les dessins des figures 2a et 2b, ledit deuxième élément de capotage 400 est lié avec les deux autres 300 et 500 par une double liaison pignon/crémaillère de façon à ce que le mouvement en translation de l'ensemble mobile 100 auquel est fixé ledit troisième élément de capotage 500, provoque instantanément le mouvement dudit deuxième élément de capotage 400 assurant un déplacement contrôlé et sans à-coups de la structure télescopique qui passe d'une position rétractée (figure 2a) où les différents éléments de capotage 300, 400 et 500 sont l'un sur l'autre à une position déployée (figure 2b) où les différents éléments de capotage 300, 400 et 500 sont l'un à la suite de l'autre. Ainsi, tel que représenté sur la figure 3, ledit deuxième élément de capotage 400 est équipé de deux platines 410 et 420 qui, disposées symétriquement sur la paroi intérieure dudit deuxième élément de capotage 400 au niveau de son extrémité avant, comportent chacune un arbre 411 et 421 perpendiculaire à l'axe de translation sur lequel pivote un pignon 412 et 422. Ces deux pignons 412 et 422 coopèrent avec deux paires de crémaillères dont deux, 210 et 220, dites crémaillères fixes, sont solidaires du bâti 200 de la machine-outil et dont les deux autres, 510 et 520, dites crémaillères mobiles, sont solidaires dudit troisième élément de capotage 500. Cette liaison par engrenage permet une transmission de mouvement homocinétique contrôlée et sans à coups assurant un fonctionnement optimal de la structure télescopique. Pour permettre son maintien entre le premier élément de capotage 300 et le troisième élément de capotage 500, ledit deuxième élément de capotage 400 comporte deux points d'appui mobiles :
- un, au niveau de son extrémité arrière puisque celle-ci est en appui sur la surface extérieure dudit premier élément de capotage fixe 300,
- et, un autre au niveau des susdites platines 410 et 420 qui, par une solution technologique judicieuse, comportent chacune un arbre 413 et 423 situé perpendiculairement à l'axe 411 et 421 desdits pignons 412 et 422 et sur lequel pivote un galet 414 et 424 de roulement. Ces galets 414 et 424 s'appuient sur la partie supérieure desdites crémaillères fixes 210 et 220 qui sont disposées de telle façon que le pignon correspondant s'engrène avec la crémaillère et que le galet correspondant roule dessus durant la course totale dudit deuxième élément de capotage 400 comme illustrée sur les figures 2a et 2b. Cette caractéristique a pour avantage de permettre une position horizontale audit deuxième élément de capotage 400 et donc un contact permanent entre les différents éléments de capotage 300, 400 et 500 du dispositif de protection, contact primordial pour garantir l'étanchéité de l'enceinte.

La liaison pignon/crémaillère entre le deuxième élément de capotage 400 sur lequel sont fixées les platines 410 et 420 et le troisième élément de capotage 500 sur lequel sont fixées les crémaillères mobiles 510 et 520, demande une configuration particulière audit troisième élément de capotage 500 du fait que les platines 410 et 420 sur lesquelles pivotent les pignons 412 et 422 se situent à l'intérieur dudit deuxième élément de capotage 400 et que ledit troisième élément de capotage 500 est de plus grande dimension que ledit deuxième élément de capotage 400. A cet effet, ledit troisième élément de capotage 500 comporte deux tabliers :
- un tablier inférieur 530, de dimensions inférieures aux dimensions d'espace défini par la paroi intérieure dudit premier élément de capotage 300 et équipé desdites deux crémaillères mobiles 510 et 520 venant s'engrener avec les dents des deux pignons 412 et 422 dudit deuxième élément de capotage 400,
- et un tablier supérieur 540 venant recouvrir en position rétractée ledit deuxième élément de capotage 400.

Comme illustrée sur le dessin de la figure 3, la partie supérieure des éléments de capotage 300, 400 et 500 est une plaque de métal façonnée par plusieurs pliages successifs de telle sorte qu'elle adopte une forme de toit à deux pentes de façon à ne pas garder sur sa surface des déchets d'usinage. Ces deux pentes sont prolongées de chaque côté par une paroi verticale laquelle est pliée vers l'intérieur de façon à présenter une surface horizontale. Cette forme de caissons ouverts vers le bas, facilite l'étanchéité de l'ensemble aux projections métalliques notamment le retour vers l'intérieur.

L'étanchéité de l'enceinte formée par les trois éléments de capotage est en outre avantageusement achevée par la présence de joints racleurs 600 qui, représentés par des quadrilatères à diagonales, sont fixés sur la surface extérieure des éléments de capotage mobiles 400 et 500. Ces joints racleurs 600 permettent de dégager la surface extérieure de l'enceinte de tous les copeaux ou poussières résultant de l'usinage et présents sur les éléments de capotage et éventuellement attirés par l'aimantation due à l'utilisation possible de moteurs linéaires. Ainsi, les copeaux qui restent sur ledit deuxième élément de capotage 400, malgré sa forme pentue, sont poussés vers l'extérieur par le joint racleur 600 fixé sur le troisième élément de capotage 500, et les copeaux restés sur ledit premier élément de capotage 300 sont poussés vers l'extérieur par le joint racleur 600 fixé sur ledit deuxième élément de capotage 400. Des joints racleurs 600 sont aussi fixés sur la surface intérieure et extérieure horizontale du deuxième élément de capotage 400, car les deux surfaces intérieures horizontales du deuxième élément de capotage 400 viennent en contact par l'intermédiaire de joints racleurs 600 avec deux pièces supports 230 et 240 solidaires du bâti et sur lesquelles sont fixées les deux crémaillères fixes 210 et 220. En dehors du fait qu'elles contribuent à l'étanchéité de l'ensemble, ces pièces supports 230 et 240 assurent un guidage auxiliaire pour le mouvement en translation de l'ensemble de la protection télescopique P.

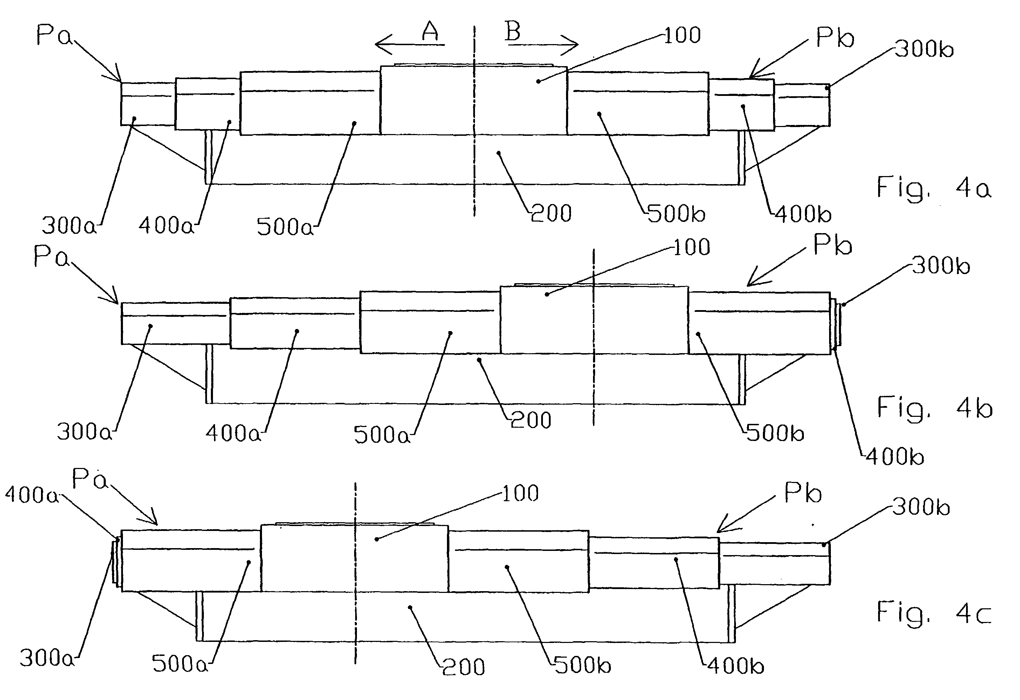

Un deuxième mode de réalisation de ce dispositif de protection est illustré sur les figures 4a, 4b et 4c dans lesquelles un ensemble mobile 100 évolue suivant une direction horizontale ( flèches A et B) sur un bâti 200 de machine-outil. A ses cotés, le susdit ensemble mobile 100 comporte deux dispositifs de protection télescopique Pa et Pb disposés de part et d'autre de l'ensemble mobile en translation de la machine-outil d'usinage de façon à ce que lorsque les éléments de capotage 300a, 400a et 500a de la première structure télescopique Pa sont en position déployée (cf figure 4b) les éléments de capotage 300b, 400b et 500b de la deuxième structure télescopique Pb sont en position rétractée et que lorsque les éléments de capotage 300a, 400a et 500a de la première structure télescopique Pa sont en position rétractée (cf figure 4c) les éléments de capotage 300b, 400b et 500b de la deuxième structure télescopique Pb sont en positon déployée.

On comprend que les dispositifs de protection qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

Afin de permettre une meilleure compréhension des dessins, une liste des références avec leurs légendes est ci-après énumérée.

| | |
|---|---|
| 100 | Organe mobile |
| 200 | Bâti de la machine-outil |
| 210, 220 | Crémaillères fixes |
| 230, 240 | Pièces supports des crémaillères 210 et 220 |
| 300, 300a, 300b | Premiers éléments de capotage fixes |
| 400, 400a, 400b | Deuxièmes éléments de capotage mobiles |
| 410, 420 | Platines |
| 411, 421 | Arbre de rotation des pignons 412 et 422 |
| 412, 422 | Pignons pivotant autour des arbres 411 et 421 |
| 413, 423 | Arbres de rotation des galets d'appui 414 et 424 |
| 414, 424 | Galets d'appui pivotant autour des arbres 413 et 423 |
| 500, 500a, 500b | Troisièmes éléments de capotage mobiles |
| 510, 520 | Crémaillères mobiles |
| 530 | Tablier inférieur du troisième élément de capotage |
| 540 | Tablier supérieur du troisième élément de capotage |
| 600 | Joints racleurs |
| Flèches A, B | Mouvements de translation de l'ensemble mobile 100 |
| P, Pa, Pb | Structures télescopiques |

## Revendications

1. Dispositif de protection (P) d'organes de guidage et d'entraînement d'une machine-outil d'usinage comportant un ensemble mobile en translation (100), du type de celui comprenant trois éléments de capotage (300, 400 et 500) se déplaçant l'un dans l'autre pour former une structure télescopique homocinétique dont l'élément de capotage de plus petite dimension (300) dit premier élément de capotage est fixé au bâti (200) de la machine-outil, l'élément de capotage de plus grande dimension (500) dit troisième élément de capotage est fixé à l'ensemble mobile (100) en translation, et l'élément de capotage intermédiaire (400) dit deuxième élément de capotage coulisse sur la surface extérieure dudit premier élément de capotage (300) et sur la surface intérieure dudit troisième élément de capotage (500) de façon à former autour des organes de guidage et d'entraînement une enceinte hermétique et extensible suivant la course de l'ensemble mobile (100),
ledit deuxième élément de capotage (400) étant lié avec les premier (300) et troisième (500) éléments de capotage de façon à ce que le mouvement en translation de l'ensemble mobile (100) auquel est fixé ledit troisième élément de capotage (500), provoque instantanément le mouvement dudit deuxième élément de capotage (400) assurant un déplacement contrôlé et sans à-coups de la structure télescopique qui passe d'une position rétractée de repos où les différents éléments de capotage (300, 400 et 500) sont l'un dans l'autre à une position déployée où les différents éléments de capotage (300, 400 et 500) sont l'un à la suite de l'autre, **CARACTERISE PAR LE FAIT QUE** la transmission du mouvement relatif entre ledit troisième élément de capotage (500) et ledit deuxième élément de capotage (400) est réalisé par une double liaison pignon/crémaillère, les pignons et les crémaillères constituant cette liaison étant situés sous le dispositif de protection, ledit deuxième élément de capotage (400) étant équipé de deux platines (410 et 420) qui, disposées sur la paroi intérieure dudit deuxième élément de capotage (400), comportent un arbre (411 et 421) perpendiculaire à l'axe de translation sur lequel pivote un pignon (412 et 422) en liaison avec deux paires de crémaillères (210, 220 et 510, 520) dont l'une (210 et 220), dite paire de crémaillères fixes, est solidaire du bâti (200) de la machine-outil et dont l'autre (510, 520), dite paire de crémaillères mobiles, est solidaire dudit troisième élément de capotage (500).

2. Dispositif de protection selon la revendication 1, **CARACTERISE PAR LE FAIT QUE** ledit troisième élément de capotage (500) comporte deux parties :
- un tablier inférieur (530) de dimensions inférieures aux dimensions de l'espace défini par la paroi intérieure dudit premier élément de capotage (300) et équipé des deux susdites crémaillères mobiles (510 et 520) venant s'engrener avec les dents des deux pignons (512 et 422) dudit deuxième élément de capotage (400),
- et un tablier supérieur (540) venant recouvrir en position rétractée de repos ledit deuxième élément de capotage (400).

3. Dispositif de protection selon la revendication 1, **CARACTERISE PAR LE FAIT QUE** les susdites platines (410 et 420) des pignons (412 et 422) dudit deuxième élément de capotage (400) comportent chacune un arbre (413 et 423) situé perpendiculairement à l'arbre (411 et 421) dudit pignon (412 et 422) sur lequel pivote un galet de roulement (414 et 424) qui s'appuie sur la partie supérieure desdites crémaillères fixes (210 et 220).

4. Dispositif de protection selon l'une quelconque des revendications de 1 à 3, **CARACTERISE PAR LE FAIT QUE** chaque élément de capotage (300, 400 et 500) de la structure télescopique (P) est une plaque de métal façonnée par plusieurs pliages successifs de sorte qu'elle adopte une forme de toit à deux pentes centrée sur l'axe du mouvement en translation, les deux pentes formant ce toit se prolongeant par deux parois verticales lesquelles sont pliées à leur extrémité vers l'intérieur.

5. Dispositif de protection selon l'une quelconque des revendications de 1 à 3, **CARACTERISE PAR LE FAIT QUE** des joints racleurs (600) sont fixés sur la paroi intérieure desdits deuxième (400) et troisième élément (500) de capotage pour assurer l'étanchéité et le dégagement de tout déchet dû à l'usinage resté sur la paroi extérieure.

6. Dispositif de protection selon les revendications de 1 à 5 prises ensemble, **CARACTERISE PAR LE FAIT QUE** la susdite transmission pignon/crémaillère est conçue de façon à ce que la vitesse et l'accélération dudit troisième élément de capotage solidaire (500) de l'organe mobile (100) soient deux fois plus importantes que la vitesse et l'accélération dudit deuxième élément de capotage (400).

7. Dispositif de protection selon l'une quelconque des revendications 1 à 6, **CARACTERISE PAR LE FAIT QU'**il comprend deux structures télescopiques (Pa et Pb) disposées de part et d'autre de l'ensemble mobile (100) en translation de la machine-outil d'usinage de façon à ce que lorsqu'une première structure télescopique (Pa) est en position déployée la deuxième structure (Pb) soit en position rétractée et que lorsque la première structure (Pa) est en position rétractée, la deuxième structure (Pb) soit en positon déployée.

## Patentansprüche

1. Schutzvorrichtung (P) für Führungsteile und Antriebsteileeiner spanabtragenden Werkzeugmaschine, die eine verschiebebewegliche Anordnung (100) aufweist, mit drei Abdeckteilen (300, 400 und 500), die ineinander verschiebbar angeordnet sind und eine homokinetische teleskopische Struktur bilden, wobei das Abdeckteil (300) mit der kleinsten Abmessung, feststehendes Abdeckteil genannt, am Gestell (200) der Werkzeugmaschine befestigt ist, das Abdeckteil (500) mit der größten Abmessung, drittes Abdeckteil genannt, an der verschiebebeweglichen Anordnung (100) befestigt ist, und das dazwischen liegende Abdeckteil (400), zweites Abdeckteil genannt, an der Außenfläche des ersten Abdeckteils (300) und an der Innenfläche des dritten Abdeckteils (500) derart gleitet, daß um die Führungsteile und die Antriebsteile herum ein hermetisch geschlossener und ausziehbarer Raum gemäß dem Weg der beweglichen Anordnung (100) gebildet wird, wobei das zweite Abdeckteil (400) mit dem ersten Abdeckteil (300) und dem dritten Abdeckteil (500) derart verbunden ist, daß die Verschiebebewegung der beweglichen Anordnung (100), an der das dritte Abdeckteil (500) befestigt ist, eine sofortige Bewegung des zweiten Abdeckteils (400) bewirkt und zugleich eine gesteuerte stoßfreie Verschiebung der teleskopischen Struktur von einer zurückgezogenen Ruhestellung, in der die verschiedenen Abdeckteile (300, 400 und 500) ineinander greifen, zu einer auseinandergezogenen Stellung, in der die verschiedenen Abdeckteile (300, 400 und 500) hintereinander angeordnet sind, **dadurch gekennzeichnet, daß** die Übertragung der relativen Bewegung zwischen dem dritten Abdeckteil (500) und dem zweiten Abdeckteil (400) ermöglicht wird durch eine Doppelverbindung aus Ritzel und Zahnstange, wobei die Ritzel und die Zahnstangen, die diese Verbindung bilden, unter der Schutzvorrichtung angeordnet sind und daß das zweite Abdeckteil (400) mit zwei Platinen (410 und 420) versehen ist, die auf der Innenseite des zweiten Abdeckteils (400) angeordnet sind und die eine Welle (411 und 421) senkrecht zur Verschiebeachse aufweisen, auf der sich ein Ritzel (412 und 422) dreht, das in die beiden Zahnstangenpaare (210, 220 und 510, 520) eingreift, wobei eines der Paare (210 und 220), feststehendes Zahnstangenpaar genannt, fest mit dem Gestell (200) der Werkzeugmaschine verbunden ist, während das andere Paar (510, 520), bewegliches Zahnstangepaar genannt, fest mit dem dritten Abdeckteil (500) verbunden ist.

2. Schutzvorrichtung nach Anspruch 1, **dadurch gekennzeichnet, daß** das dritte Abdeckteil (500) zwei Abschnitte aufweist:
- ein unteres Blech (530), dessen Abmessungen kleiner sind als die Abmessungen des durch die Innenwand des ersten Abdeckteils (200) begrenzten Raumes, und das mit zwei der beweglichen Zahnstangen (510 und 520) versehen ist, die in die Zähne der beiden Ritzel (412 und 422) des zweiten Abdeckteils (400) eingreifen, und
- ein oberes Blech (540), das in der zurückgezogenen Ruhestellung das zweite Abdeckteil (400) bedeckt.

3. Schutzvorrichtung nach Anspruch 1, **dadurch gekennzeichnet, daß** die Platinen (410 und 420) der Ritzel (412 und 422) des zweiten Abdeckteils (400) jeweils eine Welle (413 und 423) aufweisen, die senkrecht zur Welle (411 und 421) des Ritzels (412 und 422) ist, auf der ein Rollrad (414 und 424) drehbar angeordnet ist, das sich auf dem oberen Abschnitt der feststehenden Zahnstangen (210 und 220) abstützt.

4. Schutzvorrichtung nach einem der Ansprüche 1 bis 3, **dadurch gekennzeichnet, daß** jedes Abdeckteil (300, 400 und 500) der teleskopischen Struktur (P) eine Metallplatte ist, die durch mehrere aufeinanderfolgende Falten derart unterteilt ist, daß sie die Form eines Daches mit zwei Schrägen aufweist, das zur Verschiebeachse zentriert ist, wobei die beiden Schrägen, die das Dach bilden, durch zwei senkrechte Wände verlängert sind, die an ihren Enden nach innen hin umgebogen sind.

5. Schutzvorrichtung nach einem der Ansprüche 1 bis 3, **dadurch gekennzeichnet, daß** Gleitdichtungen (600) auf der Innenwand des zweiten Abdeckteils (400) und des dritten Abdeckteils (500) vorgesehen sind, für deren Abdichtung und zur Entfernung von auf der Außenfläche auftreffenden aus der Bearbeitung stammenden Reste.

6. Schutzvorrichtung nach Ansprüchen 1 bis 5 in ihrer Gesamtheit, **dadurch gekennzeichnet, daß** die Übertragungsanordnung aus Ritzel und Zahnstange derart ausgebildet ist, daß die Geschwindigkeit und die Beschleunigung des dritten Abdeckteils (500), das fest mit dem beweglichen Bauteil (100) verbunden ist, zwei mal größer ist als die Geschwindigkeit und die Beschleunigung des zweiten Abdeckteils (400).

7. Schutzvorrichtung nach einem der Ansprüche 1 bis 6, **dadurch gekennzeichnet, daß** sie zwei teleskopischen Strukturen (Pa und Pb) aufweist, die beidseits der verschiebebeweglichen Anordnung (100) der spanabtragenden Werkzeugmaschine derart angeordnet sind, daß, wenn die erste teleskopische Struktur (Pa) in der auseinandergezogenen Stellung ist, die zweite Struktur (Pb) in der zurückgezogenen Stellung ist, und daß, wenn die erste Struktur (Pa) in der zurückgezogenen Stellung ist, die zweite Struktur (Pb) in der auseinandergezogenen Stellung ist.

## Claims

1. Device for the protection (P) of guiding and driving elements of a machining machine tool including an assembly provided with translation mobility (100), of the type that includes three cowling elements (300, 400 and 500) moving one into another so as to form a homokinetic telescopic structure, where the cowling element with the smallest dimension (300) being said first cowling element is fixed to the frame (200) of the machine tool, the cowling element with the greatest dimension (500) being said third cowling element is fixed to the assembly (100) moving in translation, and the intermediary cowling element (400) being said second cowling element slides on the outer surface of said first cowling element (300) and on the inner surface of said third cowling element (500) so as to form around the guiding and driving elements a sealed and extensible enclosure following the run of the mobile assembly (100),
said second cowling element (400) being linked with the first (300) and third (500) cowling elements in such a way that the translation motion of the mobile assembly (100) to which the third cowling element (500) is fixed, instantaneously provokes the motion of said second cowling element (400) ensuring a controlled and smooth displacement of the telescopic structure, which goes from a retracted position of rest where the different cowling elements (300, 400 and 500) are within each other to a stretched position where the different cowling elements (300, 400 and 500) are one behind the other, wherein the transmission of the relative motion between said third cowling element (500) and said second cowling element (400) is obtained by means of a double pinion/rack linkage, the pinions and the racks constituting such linkage being provided with two plates (410 and 420), which are placed on the inner partition of said second cowling element (400) and which are provided with a rod (411 and 421) perpendicular to the translation axis on which a pinion (412 and 422) linked with two pairs of racks (210, 220 and 510, 520) is pivoting, one of the racks (210 and 220), being said fixed pair of racks, is fixed to the frame (200) of the machine tool and the other pair (210 and 220), being said mobile pair of racks, is fixed to said third cowling element (500).

2. Protection device according to claim 1, wherein said third cowling element (500) is constituted of two parts:
- a lower apron (530), the dimensions of which are smaller than the dimensions of the space defined by the inner partition of said first cowling element (300) and provided with the two aforementioned mobile racks (510 and 520) coming into gear with the teeth of the two pinions (512 and 422) of said second cowling element (400),
- and an upper apron (540) covering said second cowling element (400) in the retracted position of rest.

3. Protection device according to claim 1, wherein the aforementioned plates (410 and 420) of the pinions (412 and 422) of said second cowling element (400) are each provided with a rod (413 and 423) located perpendicularly to the rod (411 and 421) of said pinion (412 and 422) on which a roller is pivoting, said roller leaning against the upper part of said fixed racks (210 and 220).

4. Protection device according to any one of claims 1 to 3, wherein each cowling element (300, 400 and 500) of the telescopic structure (P) is a metal plate formed by several successive foldings so that it takes the shape of a two slope roof centered on the axis of the translation motion, as the two slopes forming this roof prolongate themselves by two vertical partitions, which are folded at their extremity towards the inside.

5. Protection device according to any one of claims 1 to 3, wherein scraping seals (600) are fixed on the inner partition of said second (400) and third (500) cowling elements in order to ensure tightness and the clearance of any waste produced by the machining and which remained on the outer partition.

6. Protection device according to claims 1 to 5 taken together, wherein the aforementioned pinion/rack transmission is designed in such a way that the speed and the acceleration of said third cowling element (500) fixed on the mobile assembly (100) are twice as great as the speed and the acceleration of said second cowling element (400).

7. Protection device according to any one of claims 1 to 6, wherein it includes two telescopic structures (Pa and Pb) placed on each side of the assembly (100) mobile in translation of the machining machine tool in such a way that when the first telescopic structure (Pa) is in a stretched position, the second structure (Pb) is in a retracted position and when the first structure (Pa) is in a retracted position, the second structure (Pb) is in a stretched position.
